# EUROPÄISCHE PATENTSCHRIFT

(11) **EP 3 655 316 B1**
(45) Veröffentlichungstag und Bekanntmachung des Hinweises auf die Patenterteilung: **12.05.2021**
(21) Anmeldenummer: 18713586.8
(22) Anmeldetag: 16.03.2018
(51) Int. Cl.: B62M 11/18, B62M 11/14, F16H 3/64, F16H 3/66, B62M 6/55

(54) **ANTRIEBSANORDNUNG UND FAHRZEUG**
DRIVE ASSEMBLY AND VEHICLE
SYSTÈME DE PROPULSION ET VÉHICULE

(30) Priorität: 19.07.2017 DE 102017212321; 18.09.2017 DE 102017216502
(43) Veröffentlichungstag der Anmeldung: 27.05.2020
(73) Patentinhaber: Robert Bosch GmbH, 70442 Stuttgart (DE)
(72) Erfinder: HINTERKAUSEN, Markus, 71696 Moeglingen (DE); KIMMICH, Peter, 71144 Steinenbronn (DE)
(86) Internationale Anmeldenummer: PCT/EP2018/056756
(87) Internationale Veröffentlichungsnummer: WO 2019/015811

(56) Entgegenhaltungen:
- EP-A2- 3 239 033
- WO-A1-2011/090958
- WO-A1-2018/041460

## Beschreibung

### Stand der Technik

Die vorliegende Erfindung betrifft eine Antriebsanordnung und ein Fahrzeug. Die vorliegende Erfindung betrifft insbesondere eine Antriebsanordnung eines mit Muskelkraft und/oder - gegebenenfalls zusätzlich - mit Motorkraft antreibbaren Fahrzeuges, eines Elektrofahrrades, eBikes, Pedelecs oder dergleichen sowie ein mit Muskelkraft und/oder - gegebenenfalls zusätzlich - mit Motorkraft antreibbares Fahrzeug, ein Elektrofahrrad, eBike, Pedelec oder dergleichen. Oft werden Fahrräder, Elektrofahrräder und dergleichen am angetriebenen Hinterrad mit einer Ketten- oder Nabenschaltung ausgebildet. Alternativ dazu können auch Tretlagerantriebe mit einem integrierten Schaltgetriebe vorgesehen werden.

Problematisch ist bei bekannten Antriebsanordnungen mit am Tretlager angeordneten Schaltgetrieben deren gesteigerte Größe und/oder ihr mangelnder Wirkungsgrad. Dies betrifft insbesondere am Tretlagerantrieb ausgebildete Reibringgetriebe, Schaltgetriebe mit Hohlwellenmotor oder dergleichen. Auch ist ein Mangel an Lastschaltfähigkeit, Zugkraftunterbrechungsfreiheit und das Auftreten von Leerwegen bei bekannten Antriebsanordnungen nachteilig. Des Weiteren ist bei Ansätzen mit formschlüssigen Schaltmechaniken, die diese Nachteile vermeiden sollen, problematisch, dass die Übergänge zwischen Schaltgängen ruckartig erfolgen, was einem geschmeidigen Bewegungsablauf entgegensteht und als unangenehm empfunden wird.

Die gattungsgemäße WO 2011/090958 A1 und die nachveröffentlichte WO 2018/041460 A1 beschreiben Planetengetriebemechanismen für ein Fahrrad, bei welchen Sonnenräder steuerbar mittels eines Bremsmechanismus über Reibschluss freigebbar und arretierbar sind.

Die nach-veröffentlichte EP 3 239 033 A2 offenbart eine Antriebsanordnung für ein Fahrrad oder dergleichen, bei welcher Sonnenräder eines Planetenschaltgetriebes über Mitnehmerelemente nach Art von Schaltfingern und über eine Schaltkulisse freigebbar und arretierbar sind.

### Offenbarung der Erfindung

Der Erfindung liegt die Aufgabe zu Grunde eine alternative Antriebsanordnung anzugeben, bei welcher bei vergleichsweise kleinem Bauraum im Bereich des Tretlagers die Drehmomentübertragung mit einem vergleichsweise hohen Wirkungsgrad, das heißt bei reduzierten Verlusten, und darüber hinaus auch unter Last und somit ohne Unterbrechung der Zugkraft bei besonders geringen oder gar verschwindenden Leerwegen und bei ruckarmen oder ruckfreien Schaltübergängen erfolgen kann.

Die Aufgabe wird erfindungsgemäß mit den Merkmalen des unabhängigen Anspruches 1 gelöst vorteilhafte Weiterbildungen sind Gegenstand der jeweiligen abhängigen Ansprüche.

Die Erfindung schafft eine Antriebsanordnung für ein mit Muskelkraft und/oder - insbesondere zusätzlich - mit Motorkraft antreibbares Fahrzeug, insbesondere für ein Elektrofahrrad, eBike, Pedelec oder dergleichen, mit einer um eine Drehachse drehbaren Kurbelwelle zum Aufnehmen eines ersten und insbesondere mit Muskelkraft erzeugten Drehmomentes und mit einer Übertragungseinrichtung, welche zum Übertragen des ersten Drehmomentes von der Kurbelwelle an ein mit einem Antriebsrad des Fahrzeuges koppelbares Abtriebselement und mittels eines - insbesondere automatisch - schaltbaren mehrstufigen Planetengetriebes zu einer variablen Übersetzung ausgebildet ist. Erfindungsgemäß ist die Übersetzung des Planetengetriebes über einen Gangwechsel und durch gesteuertes Verbinden und/oder Freigeben jeweiliger Sonnenräder entsprechender Planetenstufen über ein mit dem jeweiligen Sonnenrad drehfest gekoppeltes Mitnehmerelement einstellbar. Das jeweilige Mitnehmerelement ist erfindungsgemäß radial und/oder axial außerhalb zumindest des jeweils gekoppelten Sonnenrades angeordnet in Bezug auf die Drehachse des Sonnenrades. Ferner ist ein jeweiliges Mitnehmerelement über einen steuerbaren Reibschluss mit einem Bremselement steuerbar abbremsbar und arretierbar oder freigebbar. Die Verwendung eines Planetengetriebes als formschlüssiges Getriebe erzielt einen besonders hohen Wirkungsgrad beim Übertragen des Drehmoments in Abtriebsrichtung. Darüber hinaus ist durch das Vorsehen von mit den jeweiligen Sonnenrädern drehfest gekoppelten Mitnehmerelementen außerhalb des jeweils gekoppelten Sonnenrades ein besonders zuverlässiges Verbinden, Blockieren oder Sperren und/oder Freigeben oder Entsperren der jeweiligen Sonnenräder möglich, weil auf Grund der achsenfernen Anordnung der Mitnehmerelemente und auf Grund der dadurch bei gleichem Moment reduzierten Kräfte mit besonders geringen Ausfällen und Verschleißerscheinungen zu rechnen ist. Schließlich gewährleistet die steuerbare Bremsbarkeit/Arretierbarkeit und Freigebbarkeit eines jeweiligen Mitnehmerelements über Reibschluss die Ruckfreiheit der Schaltübergänge. Ein jeweiliges Mitnehmerelement ist an einem oder als ein radial außen liegender oder äußerster Abschnitt eines mit dem jeweiligen Sonnenrad drehfest gekoppelten Bremszangenrings ausgebildet, insbesondere mit einer Kreisringform im Querschnitt oder in Draufsicht in bzw. mit einer Ebene senkrecht zu einer Rotationsachse und/oder Symmetrieachse des Bremszangenrings.

Erfindungsgemäß kann das jeweilige Mitnehmerelement in Bezug auf die Drehachse des Sonnenrades auch radial innerhalb, aber axial außerhalb des Sonnenrades ausgebildet sein. Bei größeren Sonnenrädern können sich die Mitnehmerelemente innerhalb des Radius der Sonnenräder, aber seitlich davon beabstandet befinden und dennoch im Vergleich zu den üblichen Klinken oder Ziehkeilen achsfern mit den entsprechenden Vorteilen bezüglich der Kräfte angeordnet sein.

Die Unteransprüche zeigen bevorzugte Weiterbildungen der Erfindung.

Das erfindungsgemäße Prinzip des steuerbaren Reibschlusses zwischen Mitnehmerelement und Bremselement zur Arretierung und Freigabe von Mitnehmerelement und Bremselement lässt sich mit vielfältigen konstruktiven. Details realisieren.

Bei der beanspruchten Ausgestaltungsform der erfindungsgemäßen Antriebsanordnung ist ein jeweiliges Bremselement zum steuerbaren reibschlüssigen Eingreifen mit einem zugeordneten Mitnehmerelement und mit einem zugeordneten Bremszangenring ausgebildet.

Zur Vermeidung von Leerwegen der Tretkurbeln ohne Leistungsübertragung vom Fahrer zu einem Abtriebselement bei allen Schaltvorgängen durch eine Umlaufzeit der Mitnehmerelemente ist es in vorteilhafterweise bei einer Weiterbildung vorgesehen, dass mehrere Mitnehmerelemente über einen mechanisch selbstschaltenden Freilauf mit einem jeweiligen Sonnenrad verbunden sind, insbesondere im Zusammenhang mit einem Drehrichtungswechsel der zugehörigen Sonnenräder bei einem Gangwechsel und/oder mit einem Festhalten der jeweiligen Mitnehmerelemente in beiden Drehrichtungen, insbesondere durch eine Betätigeranordnung, z.B. mit einem oder mehreren Hydraulikzylindern.

Einige Mitnehmerelemente können also über einen mechanisch selbstschaltenden Freilauf mit einem zugehörigen Sonnenrad verbunden sein.

Des Weiteren ist bei einer vorteilhaften Weiterbildung eine koaxiale Anordnung des mehrstufigen Planetengetriebes zur Drehachse und somit zur Kurbelwelle besonders platzsparend und führt zu einer vergleichsweise kompakten Bauform.

Die kompakte Bauweise der erfindungsgemäßen Antriebsanordnung im Sinne eines Tretlagerschaltgetriebes kann alternativ oder zusätzlich gesteigert werden, indem das Planetengetriebe auch zu einem rotationssymmetrisch ausgebildeten Abtriebselement koaxial ausgebildet wird, so dass sich eine Anordnung ergibt, bei welcher das Abtriebselement als rotationssymmetrische Komponente koaxial zur Drehachse der Kurbelwelle und zum Planetengetriebe ausgebildet ist. Das Abtriebselement kann vorzugsweise als Kettenblatt oder Zahnriemenblatt, je nach Antriebsart, ausgebildet sein.

Eine weitere Fortbildung der erfindungsgemäßen Antriebsanordnung weist eine erweiterte Anzahl an Gängen und/oder an schaltbaren Übersetzungen auf, nämlich durch den Einsatz von einem oder von mehreren Freiläufen, insbesondere für die Realisierung einer Übersetzung von 1:1, in einem Stufenplanetengetriebe mit einer Übersetzung ins Schnelle und/oder in der Gesamtübersetzung durch einen Direktgang. Dabei kann es insbesondere vorgesehen sein, dass diese Übersetzungen nicht aktiv schaltbar, sondern mechanisch selbstschaltend ausgebildet sind.

Eine besonders bequeme Handhabung ergibt sich für den Anwender dann, wenn gemäß einer bevorzugten Ausführungsform der erfindungsgemäßen Antriebsanordnung das Planetengetriebe eine Mehrzahl von Gängen definiert, insbesondere mit einer Anzahl von sieben Gängen, mit Gangsprüngen, die konstant sind, nicht mehr als im Mittel etwa 26 % betragen und/oder im Einzelfall im Bereich von etwa 25 % bis etwa 27 % liegen, eine Gesamtspreizung von etwa 400 % definieren und/oder im Zusammenhang stehen mit einem zusätzlichen Direktgang und dem Einsatz eines Freilaufes, durch welchen in einem Planetengetriebe mit einer Übersetzung ins Schnelle ein Sonnenrad mit einem Planetensteg verbindbar ist. Jedoch sind auch andere Ausgestaltungen denkbar.

Verluste auf Grund von Reibung und dergleichen lassen sich in geeigneter Weise kontrollieren, indem das Planetengetriebe mit einer entsprechenden Zahl von Schaltgetriebeschaltstufen ausgebildet wird, beispielsweise mit höchstens vier Schaltgetriebeschaltstufen. Es sind jedoch auch andere Anzahlen von Schaltgetriebeschaltstufen realisierbar.

Bei einer konkreten Ausgestaltungsform der erfindungsgemäßen Antriebsanordnung ist es vorgesehen, dass die Getriebeschaltstufen gebildet werden von (i) einem ersten und insbesondere zweistufigen Planetengetriebe mit Gesamtübersetzung ins Schnelle und (ii) einem dazu in Reihe geschalteten zweiten und insbesondere zweistufigen Planetengetriebe mit Gesamtübersetzung ins Langsame, insbesondere einem Planetengetriebe in der Form eines Stufenplanetengetriebes, d.h. mit Planetenrädern, welche mehrere Stufen aufweisen, die drehfest miteinander verbunden sind.

Dabei kann den Getriebeschaltstufen insbesondere (iii) eine Hochtreiberstufe mit einem oder in Form eines Planetengetriebes mit Übersetzung ins Schnelle zur Reduktion eines hohen Fahrerdrehmomentes eingangsseitig vorgeschaltet sein.

Alternativ oder zusätzlich können (iv) die beiden in Reihe geschalteten Planetengetriebe der Getriebeschaltstufen über ein gemeinsames Hohlrad miteinander gekoppelt sein.

Bei einer anderen vorteilhaften Ausgestaltungsform der erfindungsgemäßen Antriebsanordnung wird ein besonders zuverlässiger Gangwechsel dadurch ermöglicht, indem dieser über eine Betätigeranordnug durchführbar ist, bei welcher für jedes Bremselement ein steuerbarer Betätiger, insbesondere nach Art eines Hydraulikkolbens, zugeordnet ausgebildet ist, durch welchen das zugeordnete Bremselement steuerbar reibschlüssig mit einem dem Bremselement zugeordneten Mitnehmerelement in Eingriff bringbar ist.

Die vorliegende Erfindung lässt sich nicht nur bei rein mit Muskelkraft betriebenen Fahrzeugen, z.B. bei klassischen Fahrrädern, anwenden, sondern insbesondere bei Elektrofahrrädern, eBikes, Pedelecs oder dergleichen, wie dies eingangs bereits erwähnt wurde.

Bei einer bevorzugten Ausführungsform der erfindungsgemäßen Antriebsanordnung ist es daher vorgesehen, dass ein elektrischer Antrieb zum Erzeugen eines Motordrehmoments ausgebildet ist und dass der elektrische Antrieb zum Übertragen des Motordrehmomentes über das Planetengetriebe steuerbar an das Abtriebselement koppelbar ist.

Bei einer besonders vorteilhaften Weiterbildung der erfindungsgemäßen Antriebsanordnung weist der elektrische Antrieb einen Hohlwellenmotor mit einer ausgangsseitigen Hohlwelle auf.

Dabei kann der Hohlwellenmotor insgesamt oder zumindest mit seiner Hohlwelle koaxial zur Drehachse der Kurbelwelle, zum Planetengetriebe, zum eingangsseitigen Planetensteg des Planetengetriebes und/oder zu einem Sonnenrad einer etwaig vorgesehenen Hochtreiberstufe angeordnet und ausgebildet sein.

Zusätzlich oder alternativ kann die Hohlwelle des Hohlwellenmotors mittelbar, zum Beispiel über ein Motorreduziergetriebe, oder unmittelbar mit dem eingangsseitigen Planetensteg des Planetengetriebes und/oder mit dem Sonnenrad einer etwaig vorgesehenen Hochtreiberstufe gekoppelt oder koppelbar sein, insbesondere in steuerbarer Weise.

Dabei können die Ankopplung des elektrischen Antriebes und somit die Übertragung des Motordrehmomentes von der Motorwelle auf das Planetengetriebe in verschiedener Art und Weise realisiert sein.

Bei einer bevorzugten Ausgestaltungsform der erfindungsgemäßen Antriebsanordnung ist es dazu vorgesehen, dass zwischen dem elektrischen Antrieb und dem Planetengetriebe ein Motorreduziergetriebe ausgebildet ist, zum Beispiel in Form eines mehrstufigen Stirnradgetriebes, eines Planetengetriebes oder eines Stufenplanetengetriebes, mit koaxialer Anordnung zur Hohlwelle des Hohlwellenmotors, zur Drehachse der Kurbelwelle, zum Planetengetriebe, zum eingangsseitigen Planetensteg des Planetengetriebes und/oder zum Sonnenrad einer etwaig vorgesehenen Hochtreiberstufe und/oder in im Hohlwellenmotor integrierter Form.

Ein radial besonders kompakter Aufbau ergibt sich, wenn gemäß einer alternativen Ausgestaltungsform der erfindungsgemäßen Antriebsanordnung zwischen dem elektrischen Antrieb und dem Planetengetriebe ein Motorreduziergetriebe in Form eines Evoloidgetriebes ausgebildet ist. Diese kann innen- oder außenverzahnt ausgebildet sein.

Unabhängig von der Art und Weise, wie das Motorreduziergetriebe konfiguriert ist, ist es von besonderem Vorteil, wenn ein, mehrere oder sämtliche Komponenten des jeweiligen Motorreduziergetriebes mit oder aus einem Kunststoffmaterial gefertigt sind. Damit lassen sich die Betriebsgeräusche und/oder deren Übertragung bei der erfindungsgemäßen Antriebsanordnung weiter reduzieren.

Besonders bevorzugt ist eine Antriebsanordnung, welche den Aufbau eines Mittelmotorantriebs aufweist und insbesondere ein gemeinsames Gehäuse umfasst, in welchem das Planetengetriebe, der Stellantrieb, der elektrische Antrieb, das Motoreduziergetriebe und - zumindest teilweise - die Kurbelwelle aufgenommen sind.

Die vorliegende Erfindung betrifft des Weiteren ein mit Muskelkraft und/oder - insbesondere zusätzlich - mit Motorkraft antreibbares Fahrzeug und insbesondere ein Elektrofahrrad, eBike, Pedelec oder dergleichen. Das erfindungsgemäße Fahrzeug weist mindestens ein Rad auf sowie eine erfindungsgemäß ausgebildete Antriebsanordnung, mit welcher das mindestens eine Rad des Fahrzeuges antreibbar ist.

### Kurzbeschreibung der Figuren

Unter Bezugnahme auf die beigefügten Figuren werden Ausführungsformen der Erfindung im Detail beschrieben.
- Figur 1: ist eine schematische Darstellung eines Beispiels eines Fahrzeuges nach Art eines Elektrofahrrades, bei welchem eine erste Ausführungsform der Erfindung realisiert ist.
- Figur 2: ist eine schematische Draufsicht auf eine Ausführungsform der erfindungsgemäßen Antriebsanordnung mit Kurbeltrieb und mit elektrischem Antrieb.
- Figuren 3 bis 5: zeigt in perspektivischer Seitenansicht eine Bremseinheit, die bei einer Ausführungsform der erfindungsgemäßen Antriebsanordnung eingesetzt werden kann.
- Figuren 6 und 7: zeigen in perspektivischer Seitenansicht eine Ausführungsform der erfindungsgemäßen Antriebsanordnung mit Fokus auf den elektrischen Antrieb.
- Figur 8: zeigt eine andere Ausführungsform der erfindungsgemäßen Antriebsanordnung.

### Bevorzugte Ausführungsformen der Erfindung

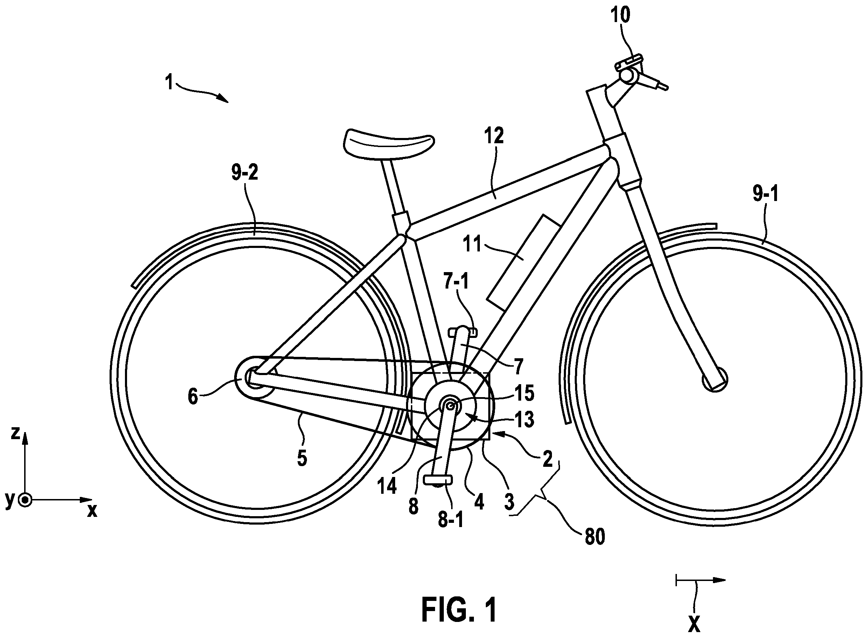

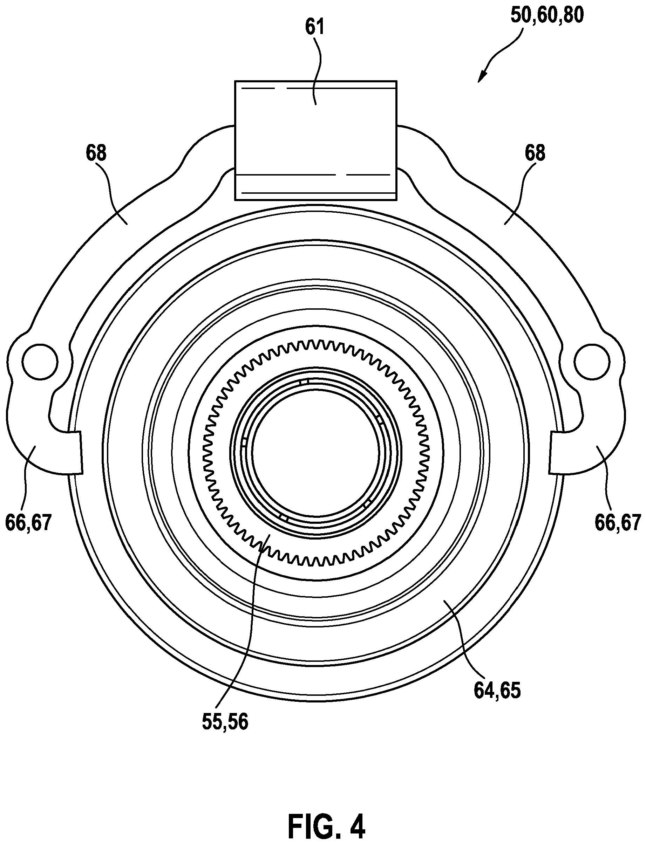

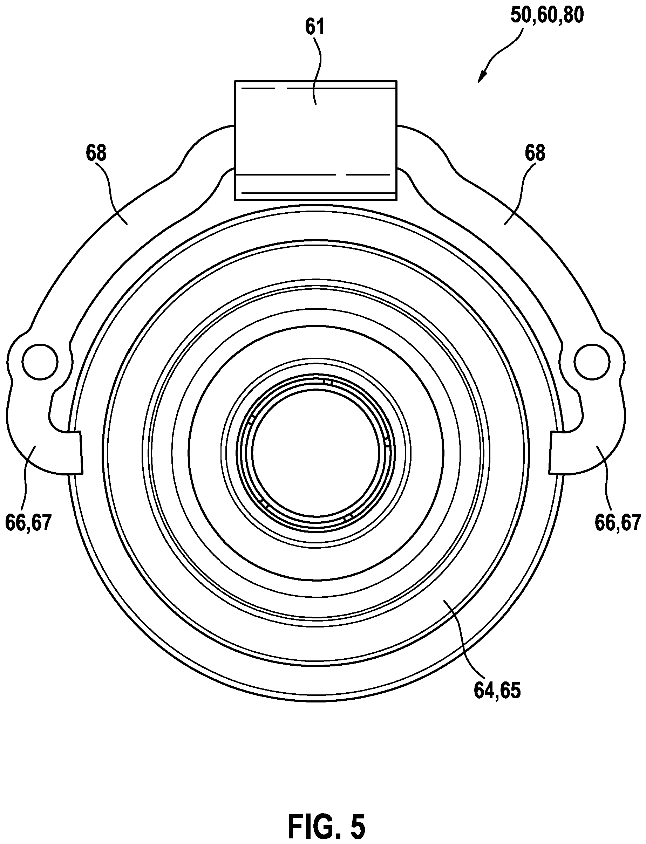

Nachfolgend werden unter Bezugnahme auf die Figuren 1 bis 8 Ausführungsbeispiele der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weitere Eigenschaften können in beliebiger Form voneinander isoliert und beliebig miteinander kombiniert werden, ohne den Kern der Erfindung zu verlassen.

Zunächst wird unter Bezugnahme auf Figur 1 beispielhaft ein Elektrofahrrad als eine bevorzugte Ausführungsform des erfindungsgemäßen Fahrzeugs 1 im Detail beschrieben.

Das Fahrzeug 1 umfasst als Elektrofahrrad einen Rahmen 12, an dem ein Vorderrad 9-1, ein Hinterrad 9-2 und ein Kurbeltrieb 2 mit zwei Kurbeln 7, 8 mit Pedalen 7-1 und 8-1 angeordnet sind. Ein elektrischer Antrieb 3 ist in den Kurbeltrieb 2 integriert. Am Hinterrad 9-2 ist ein Ritzel 6 angeordnet.

Ein Antriebsmoment, welches durch den Fahrer und/oder durch den elektrischen Antrieb 3 bereitgestellt wird, wird von einem Kettenblatt 4 am Kurbeltrieb 2 über eine Kette 5 auf das Ritzel 6 übertragen.

Am Lenker des Fahrzeuges 1 ist ferner eine Steuereinheit 10 angeordnet, welche mit dem gegebenenfalls ausgebildeten elektrischen Antrieb 3 verbunden ist. Im oder am Rahmen 12 ist ferner eine Batterie 11 ausgebildet, welche zur Stromversorgung des elektrischen Antriebes 3 dient.

Im Rahmen 12 integriert ist ein Kurbellager 13 oder Tretlager, welches ein Kurbelgehäuse 14 und eine Kurbelwelle 15 aufweist.

Die erfindungsgemäße Antriebsanordnung 80 des erfindungsgemäßen Fahrzeuges 1 aus Figur 1 weist den Kurbeltrieb 2 und den elektrischen Antrieb 3 auf, wobei die von diesen erzeugbaren Drehmomente über eine entsprechende und in Figur 1 nicht dargestellte Übertragungseinrichtung 20 mit einem schaltbaren mehrstufigen Planetengetriebe 21 aufnehmbar und an das Kettenblatt als Abtriebselement 4 übertragbar sind.

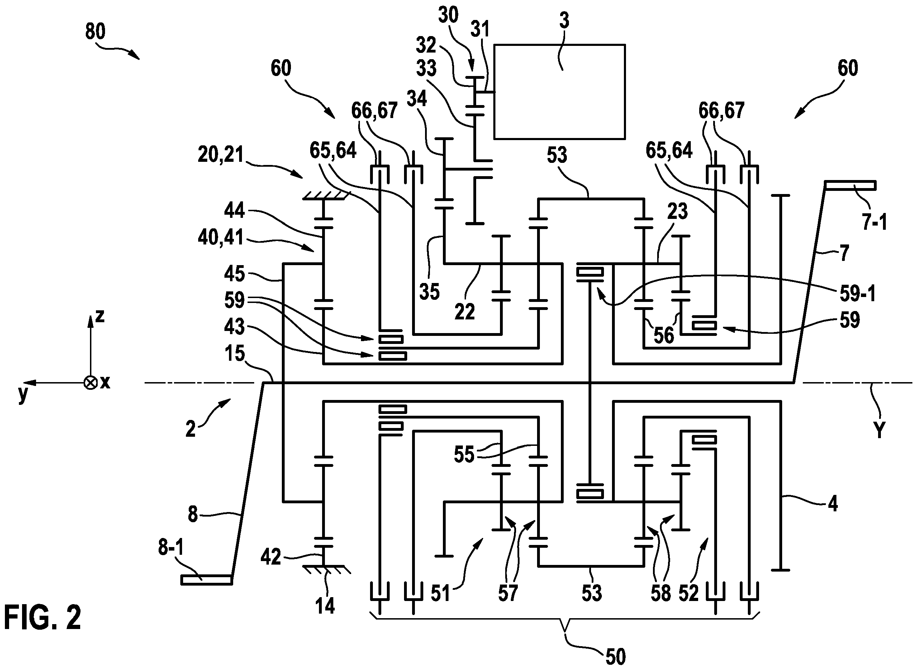

Figur 2 ist eine schematische Draufsicht auf eine Ausführungsform der erfindungsgemäßen Antriebsordnung 80 mit einem elektrischen Antrieb 3 und einem Kurbeltrieb 2.

Zur Übertragung von Drehmomenten vom Kurbeltrieb 2 und vom elektrischen Antrieb 3 ist eine Übertragungseinrichtung 20 ausgebildet, welche ein mit einem koaxial zu der durch die Kurbelwelle 15 definierten Drehachse Y angeordnetes Planetengetriebe 21 aufweist.

Das Planetengetriebe 21 besteht aus einer Hochtreiberstufe 40 mit einem Planetengetriebe 41 der Hochtreiberstufe 40 einerseits und einem mehrstufigen Schaltgetriebe 50 mit einem ersten und hier zweistufigen Planetengetriebe 51, nämlich eingangsseitig, der Hochtreiberstufe 40 zugewandt und vom Abtriebselement 4 abgewandt, und einem zweiten und hier zweistufigen Planetengetriebe 52, nämlich ausgangsseitig, dem Abtriebselement 4 zugewandt und der Hochtreiberstufe 40 abgewandt.

Die ersten und zweiten Planetengetriebe 51 und 52 des Schaltgetriebes 50 weisen entsprechende erste und zweite Sonnenräder 55 bzw. 56 und den Sonnenrädern 55, 56 zugeordnete Planetenräder 57 bzw. 58 auf, die an Planetenstegen 22, 23 gelagert und über ein gemeinsames Hohlrad 53 gekoppelt sind.

Über lösbare Verbindungen wird die Verbindung der Sonnenräder 55, 56 mit dem Gehäuse 14 der Antriebsordnung 80 in gesteuerter Art und Weise bewirkt. Dies geschieht bei der Ausführungsform gemäß Figur 2 über das gesteuert schaltbare Sperren oder Freigeben der mit den Sonnenrädern 55, 56 drehfest verbundenen und umlaufenden Mitnehmerelemente 64.

Allgemein ist ein jeweiliges Mitnehmerelement 64 erfindungsgemäß dazu ausgebildet mit einem zugeordneten Bremselement steuerbar reibschlüssig in Wechselwirkung zu treten und steuerbar abbremsbar und arretierbar und freigebbar zu sein.

Bei der in Figur 2 gezeigten Antriebsanordnug 80 weist ein jeweiliges Mitnehmerelement 64 eine Bremsscheibe 65 auf oder ist insgesamt als eine Bremsscheibe 65 ausgebildet.

Als Bremselement 66 in Zuordnung zu einem jeweiligen Mitnehmerelement 64 ist bei der in Figur 2 gezeigten Antriebsanordnug 80 eine steuerbar betätigbare Bremszange 67 ausgebildet.

Ein jeweiliges Mitnehmerelement 64 - hier in Form oder mit einer Bremsscheibe 65 - und eine jeweiliges Bremselement 66 - hier in Form einer Bremszange 67 - sind von der Drehachse Y radial beabstandet.

Jedes der Sonnenräder 55 des ersten Planetengetriebes 51 und jedes der Sonnenräder 56 des zweiten Planetengetriebes 52 der Getriebeschaltstufen 50 weist eine eigene und mit dem jeweiligen Sonnenrad 55, 56 drehfest gekoppelte oder koppelbare Bremsscheibe 65 als Mitnehmerelement 64 auf. Die Mitnehmerelemente 64 sind in Bezug auf die als Bremszangen 67 ausgebildeten Bremselemente 66, so abgestimmt angeordnet, dass durch gesteuertes Betätigen der Bremselemente und damit durch gesteuerten Reibschluss ein getrenntes oder kombiniertes Freigeben oder Sperren der einzelnen Sonnenräder 55 und 56 der ersten und zweiten Planetengetriebe 51, 52 der Getriebeschaltstufen 50 des Schaltgetriebes erreicht werden kann.

Ferner ist an verschiedenen Stellen des Schaltgetriebes 50 jeweils ein Freilauf 59 bzw. 59-1 ausgebildet, wobei der Freilauf 59-1 im Zusammenhang mit einem Direktgang steht.

Die Hochtreiberstufe 40 mit dem Planetengetriebe 41 zum Einbringen des mit Muskelkraft erzeugten Drehmomentes weist ein Hohlrad 42, ein innenlaufendes Sonnenrad 43 sowie einen dazwischen laufenden Planetensteg 45 mit Planeten 44 der Hochtreiberstufe 40 auf.

Andererseits wird das vom elektrischen Antrieb 3 erzeugte Motordrehmoment durch die Motorwelle 31 an das Motorreduziergetriebe 30 abgegeben und letztlich an ein Stirnrad 35 als Abtriebselement des Motorreduziergetriebes 30 übertragen, welches materiell verbunden ist mit dem eingangsseitigen Planetensteg 22 des Schaltgetriebes 50.

In dem in Figur 2 dargestellten Fall besteht das Motorreduziergetriebe 30 aus einer Anordnung mehrerer Stirnräder 32 bis 34, die das Motordrehmoment abtriebsseitig auf das mit dem eingangsseitigen Planetensteg 22 gekoppelte Stirnrad 35 übertragen.

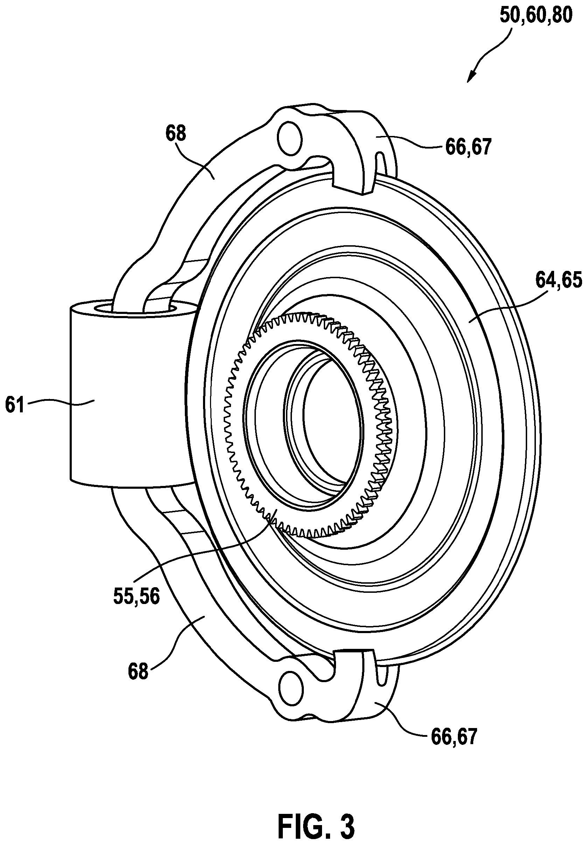

Die Figuren 3 bis 5 zeigen verschiedene perspektivische Ansichten von Sonnenrädern 55, 56 in Kombination mit einer Bremseinheit 60 mit oder aus Bremsscheibe 65 als Mitnehmerelement 64 und zugeordneter Bremszange 67 als Bremselement 66, wie sie im Zusammenhang mit der Verstelleinheit 60 einer Ausführungsform der erfindungsgemäßen Antriebsanordnung 80 verwendet werden kann.

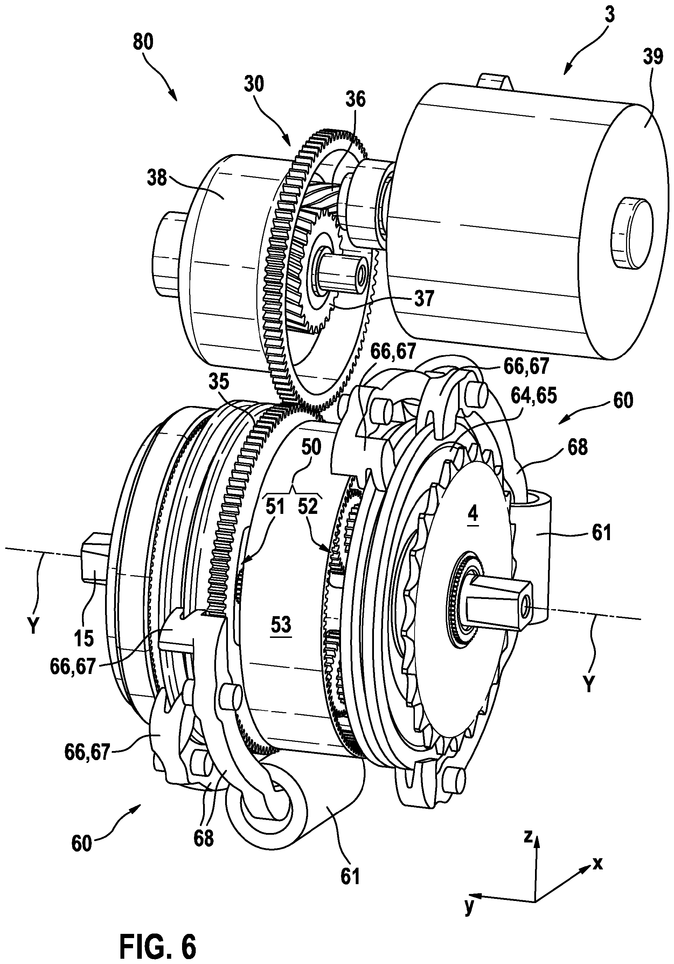

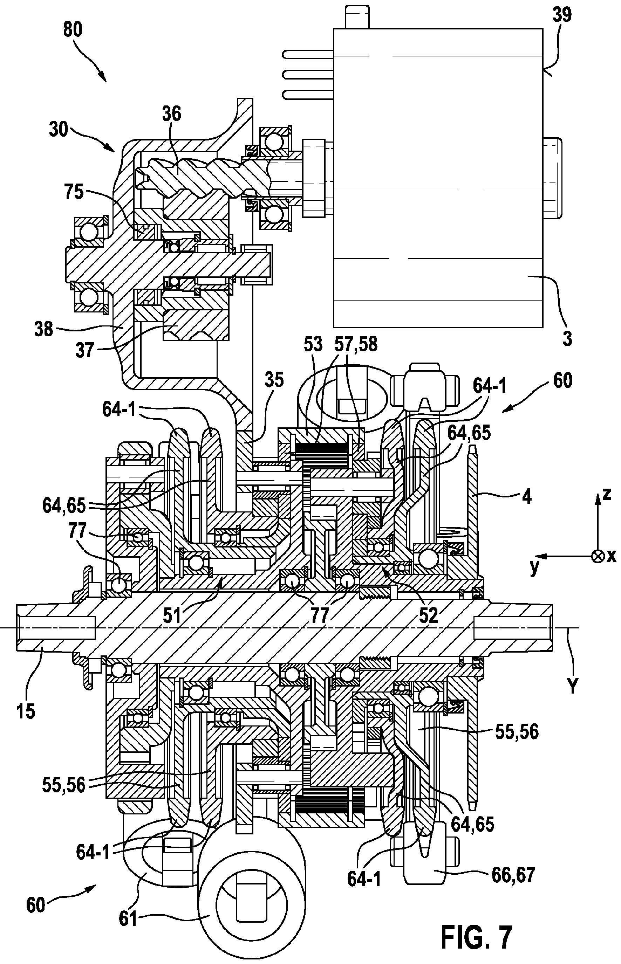

Die Figuren 6 und 7 zeigen verschiedene Ansichten einer anderen Ausführungsform der erfindungsgemäßen Antriebsanordnung 80 mit Fokus auf den elektrischen Antrieb 3 und dessen Motorreduziergetriebe 30.

Bei der Ausführungsform gemäß den Figuren 6 und 7 ist kein Stirnradgetriebe zur Übertragung des Drehmoments der Motorwelle 31 an das Zahnrad 35 der Stirnradstufe vorgesehen, sondern ein Evoloidgetriebe mit einem Evoloidritzel 36, welches an der Motorwelle 31 angebracht ist. Das Evoloidritzel kämmt mit einem Evoloidzahnrad 37. Außen am Hohlrad 38 befindet sich eine Verzahnung, die mit dem abtriebsseitigen Zahnrad 35 der Stirnradstufe des Motorreduziergetriebes 30 kämmt und das Drehmoment zur Abtriebsseite hin bereitstellt.

Der Motor 3 befindet sich in dem Kern nach im Inneren eines Motorgehäuses 39.

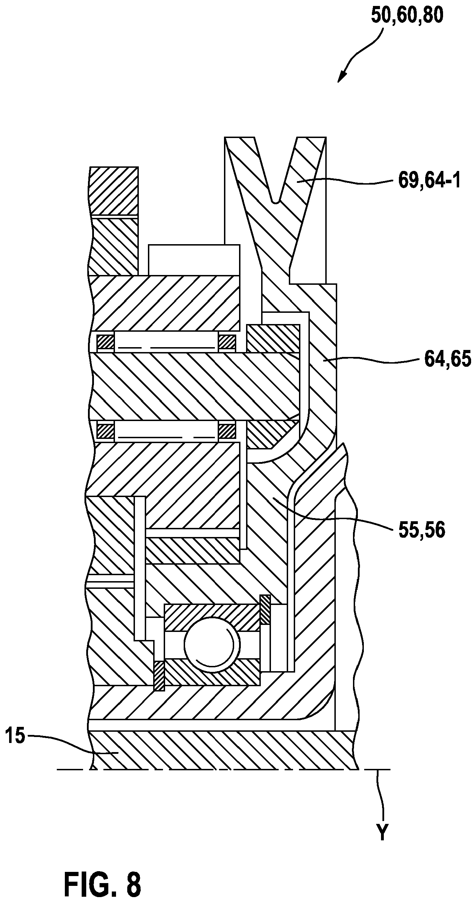

Figur 8 zeigt eine andere Ausführungsform der erfindungsgemäßen Antriebsanordnung 80, bei welcher ein jeweiliges Mitnehmerelement 64 von oder mit einem Bremszangenring 69 gebildet wird, in dessen Rille 69-1 ein Bremselement 66 der jeweiligen Bremseinheit 60 gesteuert reibschlüssig eingreifen kann, um das zugeordnete Mitnehmerelement 64 gesteuert zu bremsen, zu arretieren oder freizugeben.

Diese und weitere Merkmale und Eigenschaften der vorliegenden Erfindung werden an Hand der folgenden Darlegungen weiter erläutert:

Die Erfindung betrifft insbesondere Elektrofahrräder, Pedelecs, eBikes und dergleichen, insbesondere mit Mittelmotorantrieb und einer Fahrradschaltung zur Anpassung der begrenzten Antriebskraft des Fahrers an die unterschiedlichen Fahrwiderstände.

Eine Zielsetzung der Erfindung ist die Schaffung einer Fahrradschaltung z.B. nach dem Grundprinzip einer Nabenschaltung und diese in eine Antriebsanordnung 80 am Tretlager 13 z.B. eines Pedelecs oder dergleichen zu integrieren.

Eine übliche Schaltvorrichtung am Hinterrad 9-2 kann dann erfindungsgemäß entfallen.

Dabei soll eine besonders kompakte Konfiguration einer Antriebsanordnung 80 mit hohem Wirkungsgrad erzielt werden, die lastschaltfähig ist, ein Schalten ohne Zugkraftunterbrechung erlaubt und dabei ohne oder mit einem verringerten Maß an Leerwegen auskommt und einen besonders ruckarmen oder gar ruckfreien Schaltübergang schafft.

Bekannt sind Tretlagerantriebe mit integriertem Schaltgetriebe, welche einen Hohlwellenmotor koaxial zur Tretkurbelwelle und ein zur Tretkurbelwelle achsparalleles Schaltgetriebe aufweisen.

Ferner ist die Integration eines Reibringgetriebes als stufenlos verstellbares Fahrradschaltgetriebe in einen Pedelec/eBike-Tretlagerantrieb bekannt. Ein Reibringgetriebe hat als reibschlüssiges Getriebe den Nachteil eines im Vergleich geringeren Wirkungsgrads, welcher sich auf die Batteriereichweite und die Fahrbarkeit ohne Motorunterstützung, insbesondere beim Fahren mit über 25 km/h bei Pedelecs, auswirkt.

Ein weiteres Konzept sind Tretlagerantriebe mit integrierten Schaltungen auf der Basis von Stirnradgetrieben. Diese haben den Nachteil einer vergleichsweise geringeren Drehmomentdichte. Auch sind sie insbesondere beim Herunterschalten in einen niedrigeren Gang nicht unter Last bzw. nur unter Teillast schaltbar. Des Weiteren weisen diese Schaltungen keine elektromechanisch aktuierte automatische Gangwahl auf.

Andere Konzepte haben den Nachteil, dass das Schalten nicht zugkraftunterbrechungsfrei erfolgt. Der Fahrer erfährt beim Schalten, insbesondere wenn er beschleunigt in die Pedale tritt, einen deutlich spürbaren Leerweg der Tretkurbeln und das Auftreten eines Rucks beim Schaltübergang.

Bei anderen bekannten Mechanismen erfolgt das Schalten durch Festhalten oder Freigeben von Zahnrädern mittels Klinken, welche um die zentrale Welle der Zahnräder angeordnet sind und radial von innen in den Radkörper formschlüssig eingreifen. Auch hier ist ein ruckfreier Schaltübergang nicht gegeben.

Die Erfindung hat z.B. auch die Aufgabe, eine lastschaltfähige, zugkraftunterbrechungsfreie und effiziente Automatikfahrradschaltung zu schaffen und in eine Antriebseinheit 80 am Tretlager 13 eines Pedelecs zu integrieren, welche darüber hinaus ruckarm oder ruckfrei schaltet und kompakt ausgestaltet ist.

Eine Schaltvorrichtung am Hinterrad 9-2 kann entfallen. Dabei soll eine besonders kompakte Darstellung des Pedelec-Antriebs 80 erzielt werden.

Die Erfindung löst die gestellte Aufgabe unter anderem mit dem Einsatz und der Integration eines schaltbaren Planetengetriebes 21 in koaxialer Anordnung zur Tretkurbelwelle 15 und Kettenblatt 4. Das schaltbare Planetengetriebe 21 übernimmt die Aufgabe der Fahrradschaltung bzw. der variablen Übersetzung für die Antriebskraft des Fahrers.

Das Variieren der Übersetzung bzw. Schalten erfolgt durch Blockieren oder Freigeben von Sonnenrädern 55, 56 eines Schaltgetriebes 50 des Planetengetriebes 21. Durch den Einsatz eines formschlüssigen Getriebes ist der Wirkungsgrad gegenüber einem integrierten reibschlüssigen Getriebe verbessert.

An den Sonnenrädern 55, 56 des Schaltgetriebes 50 sind jeweils Mitnehmerelemente 64 - z.B. als Bremsscheibe 65 oder als Bremszangenring 69 - einer Bremseinheit 60 angebracht, die mit den Sonnenrädern 55, 56 drehfest verbunden oder verbindbar sind und mit diesen umlaufen.

Mittels eines jeweils zugeordneten Bremselements 66 der Bremseinheit 60 können die Mitnehmerelemente 64 und damit die Sonnenräder 55, 56 einzeln oder kombiniert in beiden Drehrichtungen durch Reibschluss gesteuert abgebremst, arretiert und blockiert oder alternativ freigegeben werden. Die Steuerbarkeit des Reibschlusses gewährleistet ruckarme oder ruckfreie Schaltübergänge.

Mit den Mitnehmerelementen 64 und den Bremselementen 66 und deren achsfernen Anordnung zur Tretkurbelwelle 15 kann bei entsprechendem Achsabstand ein formschlüssiges Blockieren, Halten und Freigeben der Sonnenräder 55, 56 in größerem Abstand zur zentralen Achse Y der Sonnenräder 55, 56 und somit geringerem Kraftaufwand erfolgen.

Ein Variieren der Übersetzung bzw. Schalten unter Maximallast auch beim besonders kritischen Herunterschalten der Gänge wird hiermit verschleißfrei, unter Beibehaltung einer kompakten Darstellung der Zahnräder und ohne Ruck möglich.

Ein oder mehrere Mitnehmerelemente 64 können über einen mechanisch selbstschaltenden Freilauf mit dem Sonnenrad 55, 56 verbunden sein. Dadurch ist es möglich, einen Leerweg der Tretkurbeln 7, 8 ohne Leistungsübertragung bei allen Schaltvorgängen zu vermeiden.

Bei den Mitnehmerelementen 64 kann mittels der Bremselemente 66 und deren Steuerbarkeit in Kombination mit dem Freilauf 59, 59-1 bei einem Drehrichtungswechsel der zugehörigen Sonnenräder 55, 56 ein Wegdrehen der Mitnehmerelemente 64 verhindert werden, so dass bei Blockade der Sonnenräder 55, 56 kein Leerweg der Tretkurbeln 7, 8 ohne Leistungsübertragung auftritt.

Erfindungsgemäß wird damit bei allen Schaltvorgängen Leistung vom Fahrer auf das Kettenblatt 4 bzw. Hinterrad 9-2 und damit zugkraftunterbrechungsfrei übertragen.

Zum erfindungsgemäßen Prinzip, nämlich dem Gangwechsel über gesteuerten Reibschluss, wird noch Folgendes ausgeführt:

Die Erfindung löst die gestellte Aufgabe mit dem Einsatz und der Integration eines schaltbaren Planetengetriebes in koaxialer Anordnung zur Tretkurbelwelle und Kettenblatt in Kombination mit einer reibschlüssigen Schaltmechanik mittels einer Bremseinheit 60 bestehend aus Bremsen mit Mitnehmerelementen 64 und Bremselementen 66 zum gesteuerten reibschlüssigen Eingreifen miteinander. Durch den Einsatz von Bremsen für den Schaltvorgang ist ein kontinuierlicher, kontrollierter Übergang zwischen den Schaltgängen möglich. Das schaltbare Planetengetriebe 21, 50 mit Planetengetrieben 51, 52 übernimmt die Aufgabe der Fahrradschaltung bzw. der variablen Übersetzung für die Antriebskraft des Fahrers. Das Variieren der Übersetzung bzw. Schalten erfolgt durch Blockieren oder Freigeben der Sonnenräder 55, 56. Durch den Einsatz eines formschlüssigen Getriebes kann der Wirkungsgrad gegenüber einem integrierten reibschlüssigen Getriebe verbessert werden.

An den Sonnenrädern 55, 56 des Planetengetriebes 50, 51, 52 sind jeweils seitlich Scheiben 65 angebracht, die mit den Sonnenrädern 55, 56 drehfest verbunden sind und mit diesen umlaufen. Mittels Bremsen 66 können die Scheiben 66 und damit die Sonnenräder 55, 56 einzeln oder kombiniert in beiden Drehrichtungen blockiert werden.

Mit den Scheiben 65 und der achsfernen Anordnung der Bremsen 66 zur Tretkurbelwelle 15 kann bei entsprechendem Durchmesser der Scheiben 65 ein reibschlüssiges Blockieren, Halten und Freigeben der Sonnenräder 55, 56 in größerem Abstand zur zentralen Achse Y der Sonnenräder 55, 56 und somit geringerem Kraftaufwand erfolgen.

Ein Variieren der Übersetzung bzw. Schalten unter Maximallast auch beim besonders kritischen Herunterschalten der Gänge wird hiermit in kontinuierlicher und kontrollierter Weise und damit ruckarm oder ruckfrei und unter Beibehaltung einer kompakten Darstellung der Zahnräder möglich.

In einer bevorzugten Weiterbildung der Erfindung sind einige Scheiben 65 über einen mechanisch selbstschaltenden Freilauf 59, 59-1 mit dem jeweiligen Sonnenrad 55, 56 verbunden.

Dadurch ist es noch einfacher möglich, einen Leerweg der Tretkurbeln 7, 8 ohne Leistungsübertragung bei allen Schaltvorgängen zu vermeiden. Die Scheiben 65 können, einmal abgebremst, weiterhin blockiert bleiben, da mit Hilfe des Freilaufs 59, 59-1 und einem Drehrichtungswechsel der zugehörigen Sonnenräder 55, 56 weitere Schaltvorgänge stattfinden können.

Ein Leerweg der Tretkurbeln 7, 8 ohne Leistungsübertragung durch die Abbremszeit der Scheiben 65 kann so in einfacher Weise verhindert werden. Erfindungsgemäß wird durch das kontrollierte Abbremsen und Freigeben der Scheiben 65 respektive der Sonnenräder 56, 56 bei allen Schaltvorgängen Leistung vom Fahrer auf das Kettenblatt als Abtriebselement 4 bzw. Hinterrad 9-2 und damit zugkraftunterbrechungsfrei übertragen.

Die Betätigung der Bremsen 66 für die Blockade der Scheiben 65 kann automatisch bevorzugt mittels Hydraulik, durch Elektromotoren mit Getriebe oder mittels Hubmagneten erfolgen.

Eine besonders kompakte Darstellung mit hoher Effizienz und einer hohen Anzahl Schaltstufen bzw. schaltbaren Gängen wird durch die Realisierung des schaltbaren Planetengetriebes 50 als doppeltes Stufenplanetengetriebe mit Planetengetrieben 51 und 52 mit Verbindung der beiden Stufenplanetengetriebe 51, 52 über ein gemeinsames Hohlrad 53 und einer dem schaltbaren Planetengetriebe 50 vorgeschalteten Hochtreiberstufe 40, welche das hohe Drehmoment des Fahrers reduziert, erreicht.

Dabei übersetzt das dem Eingangsdrehmoment des Fahrers zugewandte Stufenplanetengetriebe 55 ins Schnelle und das dem Kettenblatt 4 zugewandte zweite Stufenplanetengetriebe 56 ins Langsame. In dem Stufenplanetengetriebe 55 mit der Übersetzung ins Schnelle können durch einen selbstschaltenden Freilauf zwei Wellen miteinander verbunden und damit in einfacher Weise zusätzlich die Übersetzung 1:1 in diesem Stufenplanetengetriebe 55 realisiert werden.

Dadurch und durch Kombination der schaltbaren Übersetzungen der beiden Stufenplanetengetriebe 55, 56 können somit insgesamt mehr Gänge als dargestellte Getriebestufen realisiert werden.

Eine weitere Gangstufe, ein Direktgang, ergibt sich in kompakter Weise durch die Verbindung der Tretkurbelwelle 15 mit dem Planetensteg 23 des ins Langsame übersetzenden Stufenplanetengetriebes 56 über einen Freilauf 59-1.

Wenn alle Sonnenräder 55, 56 des Planetenschaltgetriebes 50 nicht blockiert sind, verbindet der Freilauf 59-1 selbstschaltend die Tretkurbelwelle 15 mit dem Planetensteg 23 und damit auch direkt mit dem Kettenblatt 4.

Ein eingelegter bzw. geschalteter Direktgang führt zu einer weiteren Verbesserung des Wirkungsgrads.

An das koaxial zur Tretkurbelwelle 15 und zum Kettenblatt 4 angeordnete Schaltgetriebe 50 kann wahlweise ein Motor 3 über ein Reduziergetriebe 30, vorzugsweise zwischen Hochtreiberstufe 40 und Planetenschaltgetriebe 50, angebunden werden.

Figur 1 zeigt in einer bevorzugten Ausführung schematisch den Aufbau eines Pedelec/eBike-Tretlagerantriebs 80 mit einem integrierten lastschaltbaren Planetengetriebe 50 in koaxialer Anordnung zur Kurbelwelle 15 und zum Kettenblatt 4.

Wie in Figur 2 gezeigt ist, kann sich das schaltbare Planetengetriebe 50 aus zwei Stufenplanetengetrieben 51, 52 mit jeweils einem Stufenplaneten 57, 58, welche aus zwei drehfest miteinander verbundenen Planeten mit unterschiedlichen Durchmessern bestehen, zusammensetzen. Beide Stufenplanetengetriebe 51, 52 sind über ein gemeinsames Hohlrad 53 miteinander verbunden.

Das dem Kettenblatt 4 zugewandte Stufenplanetengetriebe 56 übersetzt ins Langsame und das der Hochtreiberstufe 40 zugewandte Stufenplanetengetriebe 55 linksseitig neben dem Stufenplanetengetriebe 56 übersetzt ins Schnelle.

Durch seitlich an den Sonnenrädern 55, 56 des Planetenschaltgetriebes 50 angebrachte Mitnehmerelemente 64 - in Form von Bremsscheiben oder auch in Form von Bremszangenringen 69 - können die Sonnenräder 55, 56 einzeln oder in Kombination mittels einer Schaltkulisse 66 in ihrer Drehbewegung blockiert bzw. drehfest mit dem Gehäuse 14 verbunden und wieder freigegeben werden. Figur 2 zeigt in einer bevorzugten Ausführung den Aufbau eines Pedelec/eBike-Tretlagerantriebs 80 mit einem integrierten lastschaltbaren Planetengetriebe 50 in koaxialer Anordnung zur Kurbelwelle 15 und Kettenblatt 4 und reibschlüssiger Schaltmechanik mit einer Bremseinheit 60 mit Mitnehmerelementen 64 und mit Bremselementen 66 zum gesteuerten Reibschluss. Das schaltbare Planetengetriebe 50 setzt sich aus zwei Stufenplanetengetrieben 51, 52 mit jeweils einem Stufenplaneten, welcher aus zwei drehfest miteinander verbundenen Planeten 57, 58 mit unterschiedlichen Durchmessern besteht, zusammen. Beide Stufenplanetengetriebe 51, 52 sind über ein gemeinsames Hohlrad 53 miteinander verbunden. Das dem Kettenblatt 4 zugewandte Stufenplanetengetriebe 52 übersetzt ins Langsame und das zweite Stufenplanetengetriebe 51 linksseitig neben dem ersten Stufenplanetengetriebe 52 übersetzt ins Schnelle.

Durch seitlich an den Sonnenrädern 56, 57 des Planetenschaltgetriebes 50 angebrachte Bremsscheiben 65 als Mitnehmerelemente 64 können die Sonnenräder 55, 56 einzeln oder in Kombination mittels Bremselementen 66 oder Bremsen in ihrer Drehbewegung gesteuert abgebremst, blockiert bzw. drehfest mit dem Gehäuse 14 verbunden und wieder freigegeben werden.

Durch das Blockieren und Freigeben der vier Sonnenräder 55, 56 können insgesamt vier Übersetzungen dargestellt werden. Weitere Übersetzungen ergeben sich durch den Einsatz von Freiläufen 59, 59-1, durch die zum einen innerhalb des linksseitigen Stufenplanetengetriebes 51 mit Übersetzung ins Schnelle der Planetensteg 22 mit einem Sonnenrad 57 und zum anderen die Tretkurbelwelle 15 mit dem Planetensteg 23 des rechtsseitigen ins Langsame übersetzenden Stufenplanetengetriebes 52 und damit direkt mit dem Kettenblatt 4 als Direktgang verbunden werden.

In beiden Fällen kann zusätzlich die Übersetzung 1:1 sowohl in dem linksseitigen Stufenplanetengetriebe 51 als auch in der Gesamtübersetzung als Direktgang realisiert werden.

Dabei bedeutet ein Direktgang einen entsprechend besonders hohen Wirkungsgrad. Die beiden mittels Freilauf 59, 59-1 realisierten Übersetzungen müssen nicht aktiv geschaltet werden, sondern erfolgen durch die beiden Überholfreiläufe jeweils mechanisch selbstschaltend.

Es lassen sich insbesondere sieben Gänge realisieren. Die Übersetzungen reichen von Übersetzung 1 im ersten Gang, dem Direktgang, bis Übersetzung 0,25 im siebten Gang. Es ergibt sich eine Gesamtspreizung von 400% und Gangsprüngen von im Mittel ca. 26%. Damit wird eine erforderliche Entfaltung von 2 m bis 8 m für Standardräder abgedeckt.

Die vier Bremsen 66 gemäß Figur 2 können gesteuert unabhängig voneinander und automatisch und bevorzugt mittels Hydraulik - wie in den Figuren 3 bis 7 gezeigt ist - durch Elektromotoren mit Getriebe oder mittels Hubmagneten betätigt werden.

Durch gleichzeitiges Abbremsen und Freigeben von Mitnehmerelementen 64 und insbesondere von Bremsscheiben 65 ist ein Variieren der Übersetzung bzw. Schalten unter Last in kontinuierlicher und kontrollierter Weise und damit ruckarm oder ruckfrei möglich.

Figur 2 zeigt zudem, dass in einer bevorzugten Weiterbildung der Erfindung zwei der vier Bremsscheiben 65 jeweils über einen selbstschaltenden Überholfreilauf 59, 59-1 mit dem zugehörigen Sonnenrad 55, 56 verbunden sind.

Die Bremsscheibe 65 kann so mittels der Bremse 66 in der Blockadeposition gehalten und gleichzeitig das Sonnenrad 55, 56 für einen Gangwechsel wieder freigegeben werden. Dies geschieht, indem bei einem Gangwechsel das Sonnenrad 55, 56 eine Drehrichtungsumkehr erfährt und dabei gleichzeitig der Freilauf 59, 59-1 die Bremsscheibe 65 von dem zugehörigen Sonnenrad 55, 56 entkoppelt. Durch das Verhindern einer Bewegung der Bremsscheiben 65 wird bei erneuter Blockade der Bremsscheibe 65 respektive des Sonnenrads 55, 56 ein Leerweg der Tretkurbeln 7, 8 ohne Leistungsübertragung durch die Abbremszeit der Bremsscheibe 65 bis zum Stilstand vermieden. Damit ist es noch einfacher möglich, dass für keinen der Gangwechsel ein Leerweg der Tretkurbeln 7, 8 ohne Leistungsübertragung entsteht. Es findet bei jedem Gangwechsel eine Leistungsübertragung vom Fahrer auf das Kettenblatt 4 bzw. Hinterrad 9-2 und damit zugkraftunterbrechungsfrei statt.

Erfindungsgemäß wird durch das kontrollierte Abbremsen und Freigeben der Bremsscheiben 65 respektive der Sonnenräder 55, 56 bei allen Schaltvorgängen Leistung vom Fahrer auf das Kettenblatt bzw. Hinterrad und damit zugkraftunterbrechungsfrei übertragen.

In den Figuren 3 bis 5 ist ein Ausführungsbeispiel der reibschlüssigen Schaltmechanik nach Art einer erfindungsgemäßen Bremseinheit 60 an einem Sonnenrad 55, 56 bestehend aus Bremsscheiben 65 als Mitnehmerelementen 64, zwei Bremshebeln mit Bremszangen 67 als Bremselementen 66 und Hydraulikzylindern 61 als Betätiger in verschiedenen Ansichten dargestellt.

Bei einem Abbremsvorgang werden mittels Hydraulikzylinder 61 über zwei Bremshebel 68 zwei Bremszangen 67 auf die Bremsscheibe 65 gedrückt und damit das zugehörige Sonnenrad 55, 56 abgebremst.

Durch Regelung der Hydraulikzylinder 61 geschieht dies kontinuierlich und in kontrollierter Weise.

In Figur 6 ist der Gesamtaufbau eines Pedelec/eBike-Tretlagerantriebs 80 mit integriertem lastschaltfähigem 7-Gang-Planetenschaltgetriebe 20, 50 in koaxialer Anordnung zur Kurbelwelle 15 und Kettenblatt 4, Motoranbindung und reibschlüssiger Schaltmechanik 60 bestehend aus vier Bremsscheiben 65 gemäß den vier Sonnenrädern 55, 56, acht Bremshebeln 68 mit Bremszangen 67 und vier Hydraulikzylindern 61 zu sehen.

Bevorzugt für eine besonders kompakte Auslegung des Tretlagerantriebs 80 werden jeweils zwei Bremshebel 68 mit Bremszangen 67 für jede der vier Bremsscheiben 65 eingesetzt.

Figur 7 zeigt den Gesamtaufbau eines Pedelec/eBike-Tretlagerantriebs 80 mit integriertem lastschaltfähigem 7-Gang-Planetenschaltgetriebe 20, 50 in koaxialer Anordnung zur Kurbelwelle 15 und Kettenblatt 5, Motoranbindung und reibschlüssiger Schaltmechanik 60 bestehend aus vier Bremsscheiben 65 gemäß der vier Sonnenräder, acht Bremshebeln 68 mit Bremszangen 67 und vier Hydraulikzylindern 61 im Schnittbild.

Dabei ist am Ende einer jeweiligen Bremsscheibe 65 in bevorzugter Weise ein Reibelement 64-1 ausgeführt. Zwei der vier Bremsscheiben 65 sind für eine kompakte Darstellung des Tretlagerantriebs 80 axial versetzt gestaltet.

In Figur 8 ist eine alternative Ausführung des Reibelements 64-1 am Ende des Mitnehmerelements 64 dargestellt. Eine ringförmige Bremszange befindet sich dort am Ende des Mitnehmerelements 64, welche somit als Bremszangenring 69 fungiert, wogegen nun am jeweiligen Bremshebel 68 ein Bremselement 66 zum gesteuerten oder steuerbaren reibschlüssigen Eingreifen in die Rille 69-1 als Reibelement 64-1 des Bremszangenrings 69 als Mitnehmerelement 64 ausgebildet ist.

Auf Grund des radialen Abstands der reibschlüssigen Schaltmechanik 60 aus Bremsscheiben 65, Bremshebeln 68 mit Bremszangen 67 und Hydraulikzylindern 61 zur zentralen Achse Y der Tretkurbelwelle 15 bzw. der Sonnenräder 55, 56 und dadurch geringeren Umfangskräften kann auch bei hoher Drehmomentdichte durch ein hohes maximales Drehmoment des Fahrers und kompakten Abmessungen eines Fahrradantriebs 80 unter Maximallast die Übersetzung variiert bzw. geschaltet werden.

Durch das Blockieren und Freigeben der vier Sonnenräder 55, 56 können insgesamt vier Übersetzungen dargestellt werden.

Eine weitere Übersetzung ergibt sich innerhalb des linksseitigen Stufenplanetengetriebes 55 mit Übersetzung ins Schnelle durch die Verbindung des Planetenstegs 22 mit einem Sonnenrad 55 über einen Freilauf, wie dies in Figur 2 gezeigt ist. Dadurch kann zusätzlich die Übersetzung 1:1 in diesem Stufenplanetengetriebe 50 realisiert werden. Durch Kombination der Übersetzungen von beiden Stufenplanetengetrieben 51, 52 können dann insgesamt sechs Übersetzungen dargestellt werden.

Über einen weiteren Freilauf kann die Tretkurbelwelle 15 mit dem Planetensteg 23 des rechtsseitigen ins Langsame übersetzenden Stufenplanetengetriebes 56 und damit direkt mit dem Kettenblatt 4 verbunden werden.

Diese direkte Verbindung der Tretkurbelwelle 15 mit dem Kettenblatt 4 ergibt sich bei Freigabe bzw. Nichtblockade aller vier Sonnenräder 55, 56 des Planetenschaltgetriebes 50 und bedeutet für den Fahrer keine Übersetzung seiner Fahrerleistung zum Kettenblatt 4 bzw. die Übersetzung 1:1.

Mit dieser und den oben genannten sechs Übersetzungen können nun insgesamt sieben Übersetzungen für die Fahrerleistung zum Kettenblatt 4 zur Verfügung gestellt und damit eine Fahrradschaltung mit sieben Gängen für die Antriebskraft des Fahrers realisiert werden. Dabei bedeutet die Übersetzung 1:1 ein Direktgang mit entsprechend besonders hohem Wirkungsgrad. Die beiden mittels Freilauf realisierten Übersetzungen müssen nicht aktiv geschaltet werden, sondern erfolgen durch die beiden Überholfreiläufe jeweils mechanisch selbstschaltend.

In der folgenden Tabelle sind die sieben realisierten Gänge des bevorzugten Ausführungsbeispiels aufgeführt. Die Übersetzungen reichen von Übersetzung 1 im ersten Gang, dem Direktgang, bis Übersetzung 0,25 im siebten Gang. Es ergibt sich eine Gesamtspreizung von 400% und Gangsprüngen von im Mittel ca. 26%. Damit wird eine erforderliche Entfaltung von 2 m bis 8 m für Standardräder abgedeckt.

Auf die erfindungsgemäße Weise können bei diesem Beispiel also besonders kompakt insgesamt sieben Gänge mit vier Schaltgetriebestufen 50 dargestellt werden. Die Schaltgetriebestufen 50 sind bevorzugt so ausgelegt, dass die Gangsprünge konstant und beispielsweise nicht größer als 25 % bis 27 % sind, wie dies in der nachfolgenden Tabelle aufgelistet ist.

Für die Gesamtspreizung des Schaltgetriebes können in diesem Beispiel bis zu 400 % erzielt werden. Wird ein Sonnenrad 55 mit dem Planetensteg 22 verbunden, ergibt sich für dieses Planetengetriebe 51 eine Gesamtübersetzung von 1:1.

| Gang | Übersetzung | Gangsprung / % |
|---|---|---|
| 1 | 1,000 | |
| 2 | 0,790 | 26 |
| 3 | 0,630 | 25 |
| 4 | 0,500 | 26 |
| 5 | 0,398 | 26 |
| 6 | 0,317 | 26 |
| 7 | 0,250 | 27 |
| | | Spreizung : 400 % |

Figur 2 zeigt, dass zwei der vier Mitnehmerelemente 64 in Form von Bremsscheiben 65 jeweils über einen selbstschaltenden Überholfreilauf 59 mit dem zugehörigen Sonnenrad 55, 56 verbunden sind. Damit ist es möglich, nach einer Blockade des Mitnehmerelements 64 durch ein zugeordnetes Bremselement bei einem Gangwechsel ein Wegdrehen des Mitnehmerelements 64 vom Bremselement 66 zu verhindern. Das Mitnehmerelement 64 kann durch das Bremselement 65 in der Blockadeposition gehalten und gleichzeitig das Sonnenrad 55, 56 für einen Gangwechsel wieder freigegeben werden. Dies geschieht, indem bei einem Gangwechsel das Sonnenrad 55, 56 eine Drehrichtungsumkehr erfährt und dabei gleichzeitig der Freilauf 59 das Mitnehmerelement 64 von dem zugehörigen Sonnenrad 55, 56 entkoppelt.

Im Zusammenhang mit dem Überholfreilauf 59 steht auch derjenige Freilauf, der ein Sonnenrad 55 mit dem Planetensteg 22 verbindet.

Durch das Verhindern des Wegdrehens der Mitnehmerelemente 64 von den Bremselementen 66 wird bei erneuter Blockade eines Mitnehmerelements 64 respektive Sonnenrads 55, 56 ein Leerweg der Tretkurbeln 7, 8 ohne Leistungsübertragung durch die Umlaufzeit des Schaltfingers bis zur Position der Schaltkulisse vermieden. Damit ist sichergestellt, dass für keinen der Gangwechsel ein Leerweg der Tretkurbeln 7, 8 ohne Leistungsübertragung entsteht. Es findet bei jedem Gangwechsel eine Leistungsübertragung vom Fahrer auf das Kettenblatt 4 bzw. das Hinterrad 9-2 und damit zugkraftunterbrechungsfrei statt.

Auf Grund des Abstands der Schaltmechanik aus Mitnehmerelement 64 und Bremselement 66 zur zentralen Achse Y der Tretkurbelwelle 15 bzw. der Sonnenräder 55, 56 und dadurch geringeren Umfangskräften kann auch bei hoher Drehmomentdichte durch ein hohes maximales Drehmoment des Fahrers und den kompakten Abmessungen eines Fahrradantriebs 80 verschleißfrei unter Maximallast die Übersetzung variiert bzw. geschaltet werden.

Für eine kompakte Auslegung des Planetenschaltgetriebes 50 wird das hohe Fahrerdrehmoment durch ein dem Planetenschaltgetriebe 50 vorgeschaltetes Planetengetriebe 41 als Hochtreiberstufe 40 mit Übersetzung ins Schnelle reduziert, wie dies aus den Figuren 2 und 6 ersichtlich ist.

Der Planetenträger 45 der Hochtreiberstufe 40 ist dabei das Antriebs- bzw. Eingangselement der Hochtreiberstufe 40 und direkt mit der Tretkurbelwelle 15 drehfest verbunden. Abtriebs- bzw. Ausgangselement der Hochtreiberstufe 40 ist das Sonnenrad 43, welches mit dem Planetensteg 22 des linksseitigen Stufenplanetengetriebes 51 mit Übersetzung ins Schnelle verbunden ist. Das Hohlrad 42 der Hochtreiberstufe ist fest mit dem Gehäuse 14 verbunden.

Die Figuren 1, 6 und 7 zeigen in einer bevorzugten Ausführung die Anbindung eines Motors 3 zur Unterstützung der Fahrerleistung an das Schaltgetriebe 50. Die Anbindung des Motors 3 erfolgt über ein Reduziergetriebe 30 an den Planetensteg 22 des linksseitigen Stufenplanetengetriebes mit Übersetzung ins Schnelle. Dabei bildet der Planetensteg 22 einen Teil des Radkörpers des Abtriebszahnrads 35 des Motorreduziergetriebes 30 und ist damit in das Motorgetriebe 30 integriert. Hierdurch ergibt sich eine besonders kompakte Bauweise des Tretlagerantriebs 80.

An dem Planetensteg 22 erfolgt für die Gänge 2 bis 7 die Summation von Fahrer- und Motordrehmoment. Für den ersten Gang erfolgt die Summation von Fahrer- und Motordrehmoment an der Tretkurbelwelle 15.

Das Motorreduziergetriebe 30 besteht aus einem zweistufigen Stirnradgetriebe, wobei die motornahe Getriebestufe als ein besonders kompaktes Evoloidgetriebe mit einem Ritzel 36 auf der Motorwelle 31 mit fünf Zähnen ausgeführt ist. Auf der Zwischenwelle des Motorgetriebes ist ein Freilauf 75 angeordnet. Der Freilauf 75 ist ein Überholfreilauf und dient der Entkopplung des Motors 3 in einem Fall, bei welchem der Fahrer den Motor "überholt", d.h. beispielsweise bei Ausfall des Motors oder bei Geschwindigkeiten über 25 km/h.

Ein Schnittbild des Aufbaus des Pedelec/eBike-Tretlagerantriebs 80 mit Schaltgetriebe 50 und Motor 3 mit Motorreduziergetriebe 30 in einer bevorzugten Ausführung zeigt Figur 7.

Es zeigt insbesondere die Umsetzung der Erfindung mit Lagerung und Teilen der Gehäusestruktur. Eine besonders kompakte Darstellung des axialen Bauraums des Tretlagerantriebs 80 ergibt sich durch axial versetzte Wellenverbindungen von Planetensteg 45 und Sonnenrad 43 der Hochtreiberstufe 40.

Damit ist es möglich, unterhalb von Planetensteg 45 und Sonnenrad 43 der Hochtreiberstufe 40 die Lagerung der Tretkurbelwelle 15 anzubringen.

Bei einer besonders kompakten Weiterbildung der erfindungsgemäßen Antriebsanordnung 80 weist der elektrische Antrieb 3 einen Hohlwellenmotor mit einer ausgangsseitigen Hohlwelle auf.

Dabei kann der Hohlwellenmotor insgesamt oder zumindest mit seiner Hohlwelle koaxial zur Drehachse Y der Kurbelwelle 15, zum Planetengetriebe 21, zum eingangsseitigen Planetensteg 22 des Planetengetriebes 21 und/oder zum Sonnenrad 43 einer etwaig vorgesehenen Hochtreiberstufe 40 angeordnet und ausgebildet sein.

Das bedeutet konkret, dass bei den Ausführungsform gemäß Figur 2 der dort radial/axial seitlich versetzt angeordnete elektrische Antrieb 3 ersetzt wird durch eine koaxiale Anordnung mit Hohlwellenmotor.

Dabei kann die Hohlwelle des Hohlwellenmotors des elektrischen Antriebs 3 mittelbar, zum Beispiel über ein Motorreduziergetriebe 30, oder unmittelbar mit dem eingangsseitigen Planetensteg 22 des Planetengetriebes 21 und/oder mit dem Sonnenrad 43 einer etwaig vorgesehenen Hochtreiberstufe 40 gekoppelt oder koppelbar sein, insbesondere in steuerbarer Weise.

## Patentansprüche

1. Antriebsanordnung (80) für ein mit Muskelkraft und/oder - insbesondere zusätzlich - mit Motorkraft antreibbares Fahrzeug (1), ein Elektrofahrrad, eBike oder Pedelec,
mit:
- einer um eine Drehachse (Y) drehbaren Kurbelwelle (15) zum Aufnehmen eines ersten und insbesondere mit Muskelkraft erzeugten Drehmomentes und
- einer Übertragungseinrichtung (20), welche zum Übertragen des ersten Drehmomentes von der Kurbelwelle (15) an ein mit einem Antriebsrad (9-2) des Fahrzeuges (1) koppelbares Abtriebselement (4) und mittels eines - insbesondere automatisch - schaltbaren mehrstufigen Planetengetriebes (21) zu einer variablen Übersetzung ausgebildet ist,
bei welcher:
- die Übersetzung des Planetengetriebes (21) über einen Gangwechsel und durch gesteuertes Verbinden und/oder Freigeben jeweiliger Sonnenräder (55, 56) entsprechender Planetenstufen (57, 58) über ein mit dem jeweiligen Sonnenrad (55, 56) drehfest gekoppeltes Mitnehmerelement (64) einstellbar ist,
- das jeweilige Mitnehmerelement (64) radial und/oder axial außerhalb des jeweils gekoppelten Sonnenrades (55, 56) angeordnet ist,
- das jeweilige Mitnehmerelement (64) über einen steuerbaren Reibschluss mit einem Bremselement (66) steuerbar abbremsbar und arretierbar und/oder freigebbar ist und
- ein jeweiliges Mitnehmerelement (64) an einem oder als ein radial außen liegender oder äußerster Abschnitt eines mit dem jeweiligen Sonnenrad (55, 56) drehfest gekoppelten Bremszangenrings (69) ausgebildet ist, insbesondere mit einer Kreisringform im Querschnitt oder in Draufsicht in bzw. mit einer Ebene senkrecht zu einer Rotationsachse des Bremszangenrings (69).

2. Antriebsanordnung (80) nach Anspruch 1, bei welcher ein jeweiliges Bremselement (66) zum steuerbaren reibschlüssigen Eingreifen mit einem zugeordneten Mitnehmerelement (64) und insbesondere mit einem zugeordneten Bremszangenring (69) ausgebildet ist.

3. Antriebsanordnung (80) nach einem der vorangehenden Ansprüche, bei welcher mehrere Mitnehmerelemente (64) über einen mechanisch selbstschaltenden Freilauf (59) mit einem jeweiligen Sonnenrad (55, 56) verbunden sind, insbesondere im Zusammenhang mit einem Drehrichtungswechsel der zugehörigen Sonnenräder (55, 56) bei einem Gangwechsel und/oder mit einem Festhalten der jeweiligen Mitnehmerelemente (64) in beiden Drehrichtungen, insbesondere durch eine Betätigeranordnung, z.B. mit einem oder mehreren Hydraulikzylindern (61).

4. Antriebsanordnung (80) nach einem der vorangehenden Ansprüche, bei welcher:
- das schaltbare mehrstufige Planetengetriebe (21) im Wesentlichen koaxial zur Drehachse (Y) der Kurbelwelle (15) ausgebildet ist und/oder
- das Abtriebselement (4) rotationssymmetrisch und koaxial zur Drehachse (Y) der Kurbelwelle (15) und zum Planetengetriebe (21) ausgebildet ist und insbesondere ein Ketten- oder Zahnriemenblatt ist oder aufweist.

5. Antriebsanordnung (80) nach einem der vorangehenden Ansprüche, bei welcher eine erweiterte Anzahl an Gängen und/oder an schaltbaren Übersetzungen ausgebildet ist durch den Einsatz von einem oder von mehreren Freiläufen (59, 59-1), insbesondere für die Realisierung einer Übersetzung von 1:1, in einem Stufenplanetengetriebe (51) mit einer Übersetzung ins Schnelle, in der Gesamtübersetzung durch einen Direktgang und/oder in aktiv schaltbarer oder mechanisch selbstschaltender Art und Weise.

6. Antriebsanordnung (80) nach einem der vorangehenden Ansprüche, bei welcher das Planetengetriebe (21) eine Mehrzahl von Gängen definiert, insbesondere mit einer Anzahl von sieben Gängen, mit Gangsprüngen, die konstant sind, nicht mehr als etwa 25 % bis etwa 27 % und/oder im Mittel etwa 26 % betragen, eine Gesamtspreizung von etwa 400 % definieren und/oder im Zusammenhang stehen mit einem zusätzlichen Direktgang und dem Einsatz eines Freilaufes (59), durch welchen in einem Planetengetriebe (51) mit einer Übersetzung ins Schnelle ein Sonnenrad (55) mit einem Planetensteg (22) verbindbar ist.

7. Antriebsanordnung (80) nach einem der vorangehenden Ansprüche, bei welcher
- Getriebeschaltstufen (50) des Planetengetriebes (21) gebildet werden von (i) einem ersten und insbesondere zweistufigen Planetengetriebe (51) mit Gesamtübersetzung ins Schnelle und (ii) einem dazu in Reihe geschalteten zweiten und insbesondere zweistufigen Planetengetriebe (52) mit Gesamtübersetzung ins Langsame, vorzugsweise in Form eines Stufenplanetengetriebes, und
- insbesondere (iii) den Getriebeschaltstufen (50) eine Hochtreiberstufe (40) mit einem oder in Form eines Planetengetriebes (41) mit Übersetzung ins Schnelle zur Reduktion eines hohen Fahrerdrehmomentes eingangsseitig vorgeschaltet ist und/oder (iv) die beiden in Reihe geschalteten Planetengetriebe (51, 52) der Getriebeschaltstufen (50) über ein gemeinsames Hohlrad (53) miteinander gekoppelt sind.

8. Antriebsanordnung (80) nach einem der vorangehenden Ansprüche, bei welchem ein Gangwechsel über eine Betätigeranordnug durchführbar ist, bei welcher für jedes Bremselement (66) ein steuerbarer Betätiger (61), insbesondere nach Art eines Hydraulikkolbens, zugeordnet ausgebildet ist, durch welchen das zugeordnete Bremselement (66) steuerbar reibschlüssig mit einem dem Bremselement (66) zugeordneten Mitnehmerelement (64) in Eingriff bringbar ist.

9. Antriebsanordnung (80) nach einem der vorangehenden Ansprüche, bei welcher
- ein elektrischer Antrieb (3) zum Erzeugen eines Motordrehmoments ausgebildet ist,
- der elektrische Antrieb (3) zum Übertragen des Motordrehmomentes über das Planetengetriebe (21) steuerbar an das Abtriebselement (4) koppelbar ist, und/oder
- der elektrische Antrieb (3) einen Hohlwellenmotor mit einer ausgangsseitigen Hohlwelle aufweist, wobei insbesondere
- der Hohlwellenmotor insgesamt oder zumindest mit seiner Hohlwelle koaxial zur Drehachse (Y) der Kurbelwelle (15), zum Planetengetriebe (21), zum eingangsseitigen Planetensteg (22) des Planetengetriebes (21) und/oder zu einem Sonnenrad (43) der Hochtreiberstufe (40) angeordnet ist und/oder
- die Hohlwelle mittelbar, vorzugsweise über ein Motorreduziergetriebe (30), oder unmittelbar mit dem eingangsseitigen Planetensteg (22) des Planetengetriebes (21) und/oder mit dem Sonnenrad (43) der Hochtreiberstufe (40) gekoppelt oder koppelbar ist.

10. Antriebsanordnung (80) nach Anspruch 8, bei welcher zwischen dem elektrischen Antrieb (3) und dem Planetengetriebe (21) ein Motorreduziergetriebe (30) in Form eines mehrstufigen Stirnradgetriebes (32-34) oder eines Evoloidgetriebes (36) und insbesondere mit oder aus Kunststoffmaterial ausgebildet ist.

11. Antriebsanordnung (80) nach Anspruch 8 oder 9, welche den Aufbau eines Mittelmotorantriebs aufweist und insbesondere ein gemeinsames Gehäuse (14), in welchem das Planetengetriebe (21), der Stellantrieb (60), der elektrische Antrieb (3), das Motorreduziergetriebe (30) und - zumindest teilweise - die Kurbelwelle (15) aufgenommen sind.

12. Mit Muskelkraft und/oder - insbesondere zusätzlich - mit Motorkraft antreibbares Fahrzeug (1), Elektrofahrrad, eBike oder Pedelec, mit:
- mindestens einem Rad (9-1, 9-2) und
- einer Antriebsanordnung (80) nach einem der Ansprüche 1 bis 11 zum Antreiben des mindestens einen Rades (9-1, 9-2).

## Claims

1. Drive arrangement (80) for a vehicle (1) that can be driven by muscle power and/or - in particular additionally - by motor power, an electric bicycle, e-bike or pedelec,
having:
- a crankshaft (15) which is rotatable about an axis of rotation (Y) and which serves for receiving a first torque, generated in particular by muscle power, and
- a transfer device (20) which is designed for transferring the first torque from the crankshaft (15) to an output element (4) which is couplable to a drive wheel (9-2) of the vehicle (1) and, by means of an - in particular automatically - shiftable multi-stage planetary gearing (21), for a variable transmission ratio,
in which drive arrangement:
- the transmission ratio of the planetary gearing (21) can be adjusted by means of a gear ratio change and by means of a controlled connection and/or release of respective sun gears (55, 56) of corresponding planetary stages (57, 58) by means of a driver element (64) coupled to the respective sun gear (55, 56) for conjoint rotation,
- the respective driver element (64) is arranged radially and/or axially outside the respectively coupled sun gear (55, 56),
- the respective driver element (64) can be braked and arrested and/or released in controllable fashion by means of controllable frictional engagement with a brake element (66), and
- a respective driver element (64) is formed on a, or as a radially outer or outermost section of a, brake caliper ring (69) which is coupled to the respective sun gear (55, 56) for conjoint rotation, in particular with a circular ring shape in cross section or in plan view in or with a plane perpendicular to an axis of rotation of the brake caliper ring (69).

2. Drive arrangement (80) according to Claim 1, in which a respective brake element (66) is designed for controllable frictional engagement with an associated driver element (64) and in particular with an associated brake caliper ring (69).

3. Drive arrangement (80) according to either of the preceding claims, in which a plurality of driver elements (64) are connected by means of a mechanically self-switching freewheel (59) to a respective sun gear (55, 56), in particular in conjunction with a change in direction of rotation of the associated sun gears (55, 56) during a gear ratio change and/or with immobilization of the respective driver elements (64) in both directions of rotation, in particular by means of an actuator arrangement, for example with one or more hydraulic cylinders (61).

4. Drive arrangement (80) according to one of the preceding claims, in which:
- the shiftable multi-stage planetary gearing (21) is formed substantially coaxially with respect to the axis of rotation (Y) of the crankshaft (15) and/or
- the output element (4) is formed rotationally symmetrically and coaxially with respect to the axis of rotation (Y) of the crankshaft (15) and with respect to the planetary gearing (21), and in particular is or has a chainring or toothed-belt ring.

5. Drive arrangement (80) according to one of the preceding claims, in which an expanded number of gear ratios and/or of switchable transmission ratios is formed through the use of one or more freewheels (59, 59-1), in particular for the realization of a transmission ratio of 1:1, in a staged planetary gearing (51) with a speed-increasing transmission ratio, in the overall transmission ratio by means of a direct gear ratio, and/or in an actively switchable or mechanically self-switching manner.

6. Drive arrangement (80) according to one of the preceding claims, in which the planetary gearing (21) defines a plurality of gear ratios, in particular with a number of seven gear ratios, with gear ratio jumps which are constant and which amount to no more than approximately 25% to approximately 27% and/or on average approximately 26% and which define a total spread of approximately 400% and/or which are associated with an additional direct gear ratio and with the use of a freewheel (59) by means of which, in a planetary gearing (51) with a speed-increasing transmission ratio, a sun gear (55) is connectable to a planet carrier (22).

7. Drive arrangement (80) according to one of the preceding claims, in which
- gearing shift stages (50) of the planetary gearing (21) are formed by (i) a first and in particular two-stage planetary gearing (51) with an overall speed-increasing transmission ratio and (ii) a second and in particular two-stage planetary gearing (52) which is connected in series with the former and which has an overall speed-reducing transmission ratio, preferably in the form of a staged planetary gearing, and
- in particular (iii) a step-up stage (40) with a, or in the form of a, planetary gearing (41) with a speed-increasing transmission ratio for the reduction of a high rider torque is connected upstream at the input side of the gearing shift stages (50), and/or (iv) the two series-connected planetary gearings (51, 52) of the gearing shift stages (50) are coupled to one another by means of a common ring gear (53) .

8. Drive arrangement (80) according to one of the preceding claims, in which a gear ratio change can be performed by means of an actuator arrangement in which a controllable actuator (61), in particular in the form of a hydraulic piston, is formed so as to be associated with each brake element (66), by means of which actuator the associated brake element (66) can be brought controllably into frictional engagement with a driver element (64) assigned to the brake element (66).

9. Drive arrangement (80) according to one of the preceding claims, in which
- an electric drive (3) is designed for generating a motor torque,
- for the transmission of the motor torque, the electric drive (3) is couplable to the output element (4) in controllable fashion by means of the planetary gearing (21), and/or
- the electric drive (3) has a hollow-shaft motor with an output-side hollow shaft, wherein, in particular,
- the hollow-shaft motor is, as a whole or at least with its hollow shaft, arranged coaxially with respect to the axis of rotation (Y) of the crankshaft (15), with respect to the planetary gearing (21), with respect to the input-side planet carrier (22) of the planetary gearing (21) and/or with respect to a sun gear (43) of the step-up stage (40), and/or
- the hollow shaft is coupled or couplable indirectly, preferably via a motor reduction gearing (30), or directly to the input-side planet carrier (22) of the planetary gearing (21) and/or to the sun gear (43) of the step-up stage (40).

10. Drive arrangement (80) according to Claim 8, in which a motor reduction gearing (30) in the form of a multi-stage spur-gear gearing (32-34) or an Evoloid gearing (36), and in particular containing or consisting of plastics material, is formed between the electric drive (3) and the planetary gearing (21).

11. Drive arrangement (80) according to Claim 8 or 9, which has the construction of a mid-mounted motor drive and in particular a common housing (14), in which the planetary gearing (21), the actuating drive (60), the electric drive (3), the motor reduction gearing (30) and - at least partially - the crankshaft (15) are accommodated.

12. Vehicle (1) that can be driven by muscle power and/or - in particular additionally - by motor power, electric bicycle, e-bike or pedelec, having:
- at least one wheel (9-1, 9-2) and
- a drive arrangement (80) according to one of Claims 1 to 11 for driving the at least one wheel (9-1, 9-2).

## Revendications

1. Agencement d'entraînement (80) pour un véhicule (1) pouvant être entraîné par une force musculaire et/ou, en particulier en plus, par une force de moteur, un vélo électrique, un vélo à assistance électrique ou un pédélec, comportant :
- un vilebrequin (15) pouvant tourner autour d'un axe de rotation (Y) pour recevoir un premier couple produit en particulier par une force musculaire et
- un dispositif de transmission (20), lequel est réalisé de manière à transmettre le premier couple du vilebrequin (15) à un élément de sortie (4) pouvant être accouplé à une roue d'entraînement (9-2) du véhicule (1) et au moyen d'un engrenage planétaire (21) à plusieurs étages, commutable, en particulier automatiquement, en vue d'une transmission variable,
dans lequel :
- la transmission de l'engrenage planétaire (21) peut être réglée par le biais d'un changement de vitesses et par une liaison et/ou une libération commandées de pignons planétaires (55, 56) respectifs d'étages planétaires (57, 58) correspondants par le biais d'un élément d'entraînement (64) accouplé de manière solidaire en rotation au pignon planétaire (55, 56) respectif,
- l'élément d'entraînement (64) respectif est disposé radialement et/ou axialement à l'extérieur du pignon planétaire (55, 56) accouplé respectivement,
- l'élément d'entraînement (64) respectif peut être freiné et peut être bloqué et/ou peut être libéré de manière commandable par le biais d'une liaison par friction commandable avec un élément de freinage (66) et
- un élément d'entraînement (64) respectif est réalisé au niveau d'une partie située radialement à l'extérieur ou le plus à l'extérieur, ou en tant que telle partie, d'un anneau d'étrier de frein (69) accouplé de manière solidaire en rotation au pignon planétaire (55, 56) respectif, en particulier avec une forme circulaire annulaire en section transversale ou en vue de dessus dans ou avec un plan perpendiculaire à un axe de rotation de l'anneau d'étrier de frein (69).

2. Agencement d'entraînement (80) selon la revendication 1,
dans lequel un élément de freinage (66) respectif est réalisé pour l'entrée en prise par friction commandable avec un élément d'entraînement (64) associé et en particulier avec un anneau d'étrier de frein (69) associé.

3. Agencement d'entraînement (80) selon l'une des revendications précédentes, dans lequel plusieurs éléments d'entraînement (64) sont reliés à un pignon planétaire (55, 56) respectif par le biais d'une roue libre (59) à commutation automatique mécaniquement, en particulier en rapport avec un changement de sens de rotation des pignons planétaires (55, 56) associés en cas de changement de vitesses et/ou avec une fixation des éléments d'entraînement (64) respectifs dans les deux sens de rotation, en particulier au moyen d'un ensemble d'actionnement, par exemple à l'aide d'un ou plusieurs cylindres hydrauliques (61).

4. Agencement d'entraînement (80) selon l'une des revendications précédentes, dans lequel :
- l'engrenage planétaire à plusieurs étages commutable (21) est réalisé de manière sensiblement coaxiale par rapport à l'axe de rotation (Y) du vilebrequin (15) et/ou
- l'élément de sortie (4) est réalisé de manière à présenter une symétrie de révolution et de manière coaxiale par rapport à l'axe de rotation (Y) du vilebrequin (15) et par rapport à l'engrenage planétaire (21) et est ou comprend en particulier un plateau de chaîne ou un plateau de courroie dentée.

5. Agencement d'entraînement (80) selon l'une des revendications précédentes, dans lequel un nombre accru de vitesses et/ou de rapports de transmission commutables est formé par l'utilisation d'une ou de plusieurs roues libres (59, 59-1), en particulier pour la réalisation d'un rapport de transmission de 1:1, dans un engrenage planétaire étagé (51) à multiplication, dans le rapport de transmission total par une prise directe et/ou de manière commutable activement ou à commutation automatique mécaniquement.

6. Agencement d'entraînement (80) selon l'une des revendications précédentes, dans lequel dans lequel l'engrenage planétaire (21) définit une pluralité de vitesses, en particulier avec un nombre de sept vitesses, avec des changements de vitesses qui sont constants, ne valent pas plus d'environ 25 % à environ 27 % et/ou en moyenne environ 26 %, définissent un échelonnement total d'environ 400 % et/ou sont en rapport avec une prise directe supplémentaire et l'utilisation d'une roue libre (59), au moyen de laquelle un pignon planétaire (55) peut être relié à un porte-satellites (22) dans un engrenage planétaire (51) à multiplication.

7. Agencement d'entraînement (80) selon l'une des revendications précédentes, dans lequel
- des étages de commutation d'engrenage (50) de l'engrenage planétaire (21) sont formés par (i) un premier engrenage planétaire (51) en particulier à deux étages à rapport de transmission total de multiplication et (ii) un deuxième engrenage planétaire (52) en particulier à deux étages monté en série avec celui-ci et à rapport de transmission total de démultiplication, de préférence sous la forme d'un engrenage planétaire étagé, et
- en particulier (iii) un étage multiplicateur (40) doté ou sous la forme d'un engrenage planétaire (41) à multiplication pour la réduction d'un couple de conducteur élevé côté entrée est monté en amont des étages de commutation d'engrenage (50) et/ou (iv) les deux engrenages planétaires (51, 52) montés en série des étages de commutation d'engrenage (50) sont accouplés l'un à l'autre par le biais d'une couronne (53) commune.

8. Agencement d'entraînement (80) selon l'une des revendications précédentes, dans lequel un changement de vitesses peut être effectué par le biais d'un ensemble d'actionnement, ensemble dans lequel un actionneur (61) commandable, en particulier de type piston hydraulique, est réalisé de manière associée pour chaque élément de freinage (66), actionneur au moyen duquel l'élément de freinage (66) associé peut être amené en prise par friction commandable avec un élément d'entraînement (64) associé à l'élément de freinage (66).

9. Agencement d'entraînement (80) selon l'une des revendications précédentes, dans lequel
- un entraînement électrique (3) est réalisé pour produire un couple de moteur,
- l'entraînement électrique (3) peut être accouplé à l'élément de sortie (4) de manière commandable par le biais de l'engrenage planétaire (21) pour la transmission du couple de moteur, et/ou
- l'entraînement électrique (3) comprend un moteur à arbre creux doté d'un arbre creux côté sortie, dans lequel en particulier
- le moteur à arbre creux est disposé dans l'ensemble ou au moins par son arbre creux de manière coaxiale par rapport à l'axe de rotation (Y) du vilebrequin (15), par rapport à l'engrenage planétaire (21), par rapport au porte-satellites (22), côté entrée, de l'engrenage planétaire (21) et/ou par rapport à un pignon planétaire (43) de l'étage multiplicateur (40) et/ou
- l'arbre creux est accouplé ou peut être accouplé indirectement, de préférence par le biais d'un moto-réducteur (30), ou directement au porte-satellites (22), côté entrée, de l'engrenage planétaire (21) et/ou au pignon planétaire (43) de l'étage multiplicateur (40).

10. Agencement d'entraînement (80) selon la revendication 8, dans lequel un moto-réducteur (30) est réalisé sous la forme d'un engrenage à pignons droits à plusieurs étages (32-34) ou d'un engrenage à développante (36) entre l'entraînement électrique (3) et l'engrenage planétaire (21) et est en particulier doté ou constitué de matière synthétique.

11. Agencement d'entraînement (80) selon la revendication 8 ou 9, lequel présente la configuration d'un entraînement à moteur central et en particulier un carter (14) commun, dans lequel l'engrenage planétaire (21), l'entraînement de réglage (60), l'entraînement électrique (3), le moto-réducteur (30) et, au moins partiellement, le vilebrequin (15) sont logés.

12. Véhicule (1) pouvant être entraîné par une force musculaire et/ou, en particulier en plus, par une force de moteur, vélo électrique, vélo à assistance électrique ou pédélec, comportant :
- au moins une roue (9-1, 9-2) et
- un agencement d'entraînement (80) selon l'une des revendications 1 à 11 pour l'entraînement de l'au moins une roue (9-1, 9-2).
